# EUROPEAN PATENT APPLICATION

(11) **EP 4 800 381 A1**
(43) Date of publication of application: **02.09.2026**
(21) Application number: 26160937.4
(22) Date of filing: 26.02.2026
(51) Int. Cl.: G01N 23/223

(54) **SYSTEM AND METHOD FOR X-RAY FLUORESCENCE INSPECTION OF LIGHT ELEMENTS**

(30) Priority: 27.02.2025 US 202563763951 P
(71) Applicant: Rigaku Semiconductor Instruments Ltd., 2306990 Migdal HaEmek (IL)
(72) Inventor: OGATA, Kiyoshi, Tokyo, 1960003 (JP); KUHN, Markus, Hillsboro, OR, 97123 (US); SHKLAR, Avishai, 4020000 Kfar Vitkin (IL); UMAN, Igor, 3093745 Zichron Yaakov (IL); BLOCH, Daniel Nir, 2064377 Yoqne'am illit (IL); MILSTEIN, Dmitry, 3091664 Zichron Yaakov (IL); HILDESHEIM, Ariel, 3650131 Kiryat Tiveon (IL); JIANG, Licai, Rochester Hills, MI, 48306 (US); KIM, Bonglea, Sterling Heights, MI, 48314 (US); TAKAHASHI, Hideaki, Tokyo, 190-0021 (JP)
(74) Representative: Vossius & Partner Patentanwälte Rechtsanwälte mbB

(57) **Abstract**

An X-ray fluorescence (XRF) inspection system and method are provided for enhanced detection of light elements in a sample. The system comprises at least one X-ray radiation source configured to emit radiation within a selected energy range, an optical arrangement with one or more reflecting surfaces for filtering and focusing a specific energy band onto an inspection location, and a sample mount for holding the sample. The system is configured to maintain at least one of a vacuum environment or a helium-rich environment along the X-ray path to reduce absorption of low-energy X-rays. In some embodiments, a detector arrangement includes a segmented detector, formed of two or more detection units arranged around the path of the focused radiation, positioned at close proximity to the inspection location. The method includes generating, filtering, and focusing X-ray radiation, providing the controlled environment, and detecting fluorescence emissions for analysis of light elements.

## Description

### TECHNOLOGICAL FIELD

The present disclosure relates to a system and a corresponding method for use in XRF inspection, and is particularly relevant for inspection of samples including light elements.

### BACKGROUND

X-ray fluorescence (XRF) inspection is a widely used analytical technique for determining the composition of materials by measuring the characteristic secondary (or fluorescent) X-rays emitted from a sample upon exposure to primary X-ray radiation. Traditional XRF systems typically operate in ambient air environments and focus on the detection of mid-to-heavy atomic mass elements due to the limitations in detecting lower-energy fluorescence signals. Low-energy X-ray fluorescence signals, particularly those corresponding to elements with atomic numbers below 14, tend to be strongly absorbed by air molecules, making their accurate detection challenging in conventional systems.

Various techniques have been developed directed at detection of light elements, and/or X-ray inspection using low energy X-rays. For example, certain portable X-ray fluorescence (XRF) technologies have been developed, improving detection limits for light elements like magnesium and sodium. However, detecting these elements remains challenging due to low-energy fluorescence absorption by air and sample reabsorption, requiring higher element concentrations for reliable analysis. To address this, researchers have introduced helium environments in portable XRF systems, such as the Bruker TRACER 5g, to reduce air absorption and enhance sodium detection. While these improvements aid field applications, benchtop systems like the Bruker M4 TORNADO µ-XRF use vacuum conditions to eliminate air interference, enabling the detection of even lighter elements like carbon. These advancements continue to refine XRF technology for more precise light element analysis.

### GENERAL DESCRIPTION

To enable the detection of light elements and improve detection sensitivity, the present disclosure provides an optimized system configuration and an operation method. To this end, the system of the present disclosure utilizes a vacuum chamber or a Helium-rich environment to significantly reduce low-energy X-ray absorption, enhancing signal clarity and measurement accuracy. Additionally, in some embodiments, the technique of the present disclosure may utilize an advanced optical arrangement incorporating monochromators and other filtering mechanisms allowing precise selection of X-ray energy bands and focusing specific wavelengths onto the sample for targeted analysis. These enhancements improve the signal-to-noise ratio and overall system performance.

Further, in some embodiments, the inspection system may utilize a detector arrangement positioned at a close proximity to the inspection location. This location of the detector arrangement enables to reduce absorption of X-ray by air, if present in the system, and further to enable collection of Fluorescent X-rays with an increased solid angle. The detector arrangement may include a selected number of detector units (e.g., silicon drift detectors (SDD)), arranged around path of radiation directed toward the inspection region. For example, the detector arrangement may be placed at a distance of 2 centimeters or 1 centimeter or below from the inspection location.

Thus, according to a broad aspect, the present disclosure provides an X-ray fluorescence inspection system comprising:
at least one X-ray radiation source configured to emit X-ray radiation within a selected energy range;
an optical arrangement including one or more reflecting surfaces, configured to filter a specific energy band from the emitted X-ray radiation and focus radiation of the specific energy band onto an inspection location;
a sample mount configured to hold a sample for inspection;
wherein the specific energy band comprises energies between 0.2 keV and 2 keV, and the system is configured to maintain at least one of a vacuum environment or a helium-rich environment within at least a portion of the system associated with a path of the X-ray radiation.

According to some embodiments, the system may further comprise:
a sealed enclosure; and
at least one vacuum pump configured to maintain the sealed enclosure at a working pressure of 20 mbar or below.

According to some embodiments, the vacuum pump is further configured to maintain the sealed enclosure at a working pressure of 2 mbar or below.

According to some embodiments, the system may further comprise a helium source configured to provide a controlled flow of helium gas within the system.

According to some embodiments, the helium source includes an output nozzle positioned at a selected location in the system.

According to some embodiments, the system may further comprise a helium source comprising an output nozzle and configured to provide a controlled flow of helium gas within the system at a selected location in the system.

According to some embodiments, the optical arrangement comprises at least one multilayer monochromator configured for filtering of specific energy band.

According to some embodiments, the optical arrangement further comprises an adjustable aperture enabling control of size of an illumination spot at the inspection location.

According to some embodiments, the system may further comprise a detector arrangement configured for detection of fluorescent radiation emitted from the inspection location.

According to some embodiments, the detector arrangement comprises a selected number of detectors arranged around the X-ray radiation source.

According to some embodiments, the detector arrangement comprises a segmented detector, formed of two or more detection units arranged around a path of transmission of the radiation being focused onto the inspection location, the segmented detector is positioned at a distance of 1 centimeter or below from the inspection location.

According to some embodiments, the segmented detector comprises one or more detectors having a selected angle between a detection surface and a connection to a respective detection circuit, wherein the selected angle is between 10° and 80°. According to some embodiments, the selected angle may be 45°±15°.

According to some embodiments, the sample mount comprises a sample translation stage configured to move the sample relative to the focused X-ray beam.

According to some embodiments, the system may be configured for inspection and detection of presence and density of light elements in a sample, wherein light elements comprise elements having atomic number of 14 or below.

According to one other broad aspect, the present disclosure provides a method for X-ray fluorescence inspection, the method comprising:
generating X-ray radiation within a selected energy range using at least one X-ray radiation source;
filtering a specific energy band from the emitted X-ray radiation using an optical arrangement comprising one or more reflecting surfaces;
positioning a sample on a sample mount at an inspection location;
focusing the filtered radiation onto the inspection location;
providing at least one of a vacuum environment or a helium-rich environment within at least a portion of a path of the X-ray radiation and performing the X-ray fluorescence inspection, wherein the selected energy band comprises energies between 0.2 keV and 2 keV.

According to some embodiments, the method may further comprise maintaining the inspection environment at a pressure of 20 mbar or below using a sealed enclosure and at least one vacuum pump.

According to some embodiments, the inspection environment is at a pressure of 2 mbar or below.

According to some embodiments, the method may further comprise providing a controlled flow of helium gas within the system using a helium source.

According to some embodiments, the method may further comprise providing an output nozzle releasing helium flow in one or more selected locations in path of the X-ray radiation.

In some embodiments, the method may further comprise providing a controlled flow of helium gas flow through an output nozzle releasing helium flow in one or more selected locations within the system in path of the X-ray radiation, using a helium source.

According to some embodiments, the method may further comprise detecting fluorescence emissions from the sample using a detector assembly.

According to some embodiments, detecting fluorescence emissions from the sample using a detector assembly may comprise using an assembly of two or more detectors positioned around the at least one X-ray radiation source.

According to some embodiments, detecting fluorescence emissions from the sample using a detector assembly may comprise using a segmented detector formed of two or more detection units arranged around a path of transmission of the radiation being focused onto the inspection location, the segmented detector is positioned at a distance of 1 centimeter or below from the inspection locations.

According to some embodiments, the method may be configured for inspection and detection of presence and density of light elements in a sample, wherein light elements comprise elements having atomic number of 14 or below.

According to yet another broad aspect, the present disclosure provides an X-ray fluorescence inspection system comprising:
at least one X-ray radiation source configured to emit X-ray radiation within a selected energy range;
an optical arrangement including one or more reflecting surfaces, configured to filter a specific energy band from the emitted X-ray radiation and focus radiation of the specific energy band onto an inspection location;
a sample mount configured to hold a sample for inspection; and
a detector arrangement;
wherein the detector arrangement comprises a segmented detector, formed of two or more detection units arranged around a path of transmission of the radiation being focused onto the inspection location, the segmented detector is positioned at a distance of 1 centimeter or below from the inspection location.

According to some embodiments, the segmented detector comprises one or more detectors having a selected angle between a detection surface and a connection to a respective detection circuit, wherein the selected angle is between 10° and 80°. According to some embodiments, the selected angle may be 45°±15°.

Generally, it should be understood that various embodiments of the prtesenti disclosure may utilize any element or feature describe herein, including elements or features described in connection with other embodiments of the disclosure.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** shows absorption of X-rays emitted from light elements at different pressure and gas composition environments;
**Fig. 2** Illustrates a XRF inspection system according to some embodiments of the present disclosure;
**Figs. 3A and 3B** exemplify spectral filtering by reflection, Fig. 3A exemplifies reflection from a thin film and Fig. 3B exemplifies reflection from a multilayer monochromator;
**Figs. 4A to 4C** exemplify reflective surface arrays used for focusing beams, Fig. 4A exemplifies two consecutive elliptical reflective surfaces, Fig. 3B exemplifies two perpendicular elliptical surfaces, and Fig. 4C exemplifies focusing onto a selected focal spot;
**Figs. 5A and 5B** illustrate schematically an optical arrangement utilizing reflecting mirrors, Fig. 5A exemplifies the structure of the optical arrangement, and Fig. 5B exemplifies the orientation of the mirrors with the beam stopper;
**Fig. 6** Illustrates an XRF inspection system utilizing a segmented detector located at close vicinity to the inspection location according to some embodiments of the present disclosure;
**Figs. 7A** **and** **7B** exemplify two arrangements of the detection areas in the segmented detector according to some embodiments of the present disclosure;
**Fig. 8** illustrates schematic diagram of the segmented detector system according to some embodiments of the present disclosure.

### DETAILED DESCRIPTION OF EMBODIMENTS

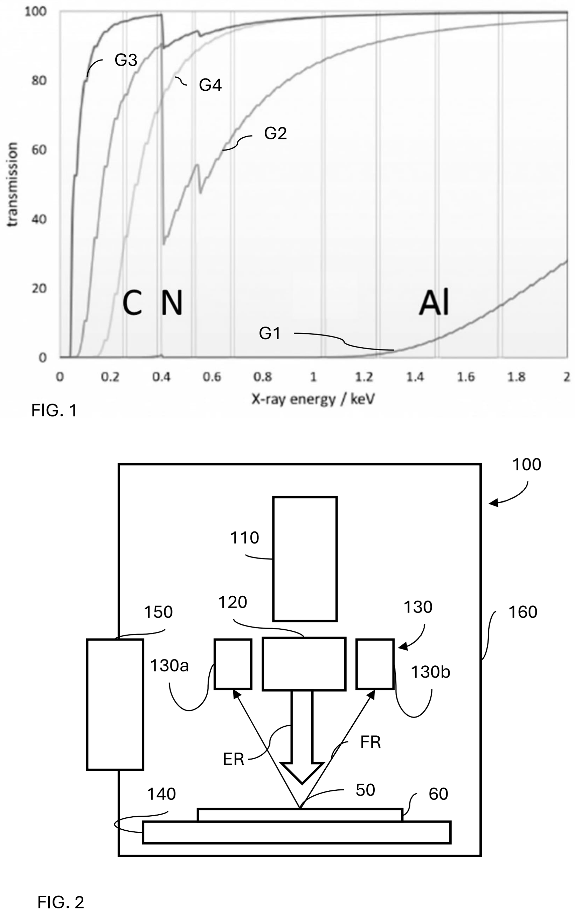

As indicated above, the present disclosure provides a system and a corresponding method enabling XRF inspection of samples and specifically directed at inspection of samples containing light elements (LE). Generally, XRF inspection of light elements is limited due to absorption of low-energy X-ray radiation by ambient air surrounding the inspection area. Fig. 1, initially reported in "Detecting light elements with portable XRF" (Portaspecs.com) exemplifies the effect of atmospheric conditions and composition on detection of LE having atomic number (z) of 13 (Aluminum) or below. Fig. 1 shows four curves G1 to G4 relating to normal atmospheric conditions (G1), reduced pressure to 20 mbar (G2), reduced pressure to 2 mbar (G3) and Helium environment (G4). As shown, X-ray radiation of energy below 1.2 KeV is almost fully absorbed by air environment at atmospheric pressure, preventing detection of LE below Aluminum (Al). Operating in vacuum conditions at pressure of 20 mbar enables transmission of the low energy X-rays, while showing high absorption around 0.4 KeV associated with Nitrogen (N₂). Increased vacuum conditions at pressure of 2 mbar further reduce the absorption, enhancing detection sensitivity. Additionally, operating in Helium rich environment (G4) shows transmission comparable to operation at 2 mbar pressure (G3) for energies of 0.7 KeV and above, while avoiding the absorption peak associated with Nitrogen presence in the atmosphere.

Various semiconductor elements often include light elements such as Aluminum (Al), Carbon (C), Nitrogen (N), and Boron (B). These elements may be used during certain stages of the lifecycle of a semiconductor wafer and/or used for selected doping within the sample. Further, monitoring of Oxygen (O) may be important as it is present in the insulating SiO₂ layers, and its presence may affect electrical conductivity through various regions of a semiconductor structure/circuit.

To this end, the present disclosure provides an X-ray fluorescence inspection system configured for scanning a sample and determining fluorescent radiation with energy range between 0.1 KeV and 2 KeV, and in at least one of vacuum environment and Helium-rich environment. Reference is made to Fig. 2 schematically illustrating an inspection system 100. The system 100 includes at least one X-ray radiation source 110 configured to emit X-ray radiation within a selected energy range, typically including one or more emissions lines within a range between 0.2KeV and 2KeV, an optical arrangement 120 configured to filter a specific energy band from the emitted X-ray radiation and focus emitted radiation ER of the specific energy band onto an inspection location 50, a sample mount 140 configured to hold a sample 60 for inspection.

The inspection system typically also includes a detection arrangement 130, including one or more (typically four) detectors, exemplified by detectors 130a and 130b. The detectors are configured for detection of secondary X-ray radiation, or fluorescent radiation, FR emitted from the sample 60 in response to X-ray radiation ER impinging thereon.

To provide desired conditions, enabling inspection within an energy range between 0.2 KeV and 2 KeV, the inspection system 100 is configured to operate providing at least one of a vacuum environment or a Helium-rich environment for fluorescent radiation. Generally, the selected vacuum of helium rich conditions may be used in a selected region between the sample 60 and the detector arrangement 130. To this end, the system includes an environment condition module 150 configured and operable for providing desired operation conditions, selected to reduce absorption of X-ray radiation by the inspection environment, and thus enhancing detection of LE within the sample 60.

Generally, the X-ray source 110 may be any X-ray source may be a Tungsten (W) anode X-ray tube, or any other X-ray source capable of emitting X-ray radiation including the energy range between 0.2 KeV and 2 KeV. The X-ray source 110 and/or the optical arrangement 120 may provide filtering of the emitted X-ray radiation to provide radiation ER within the selected energy range directed at an inspection location 50 on the sample 60.

A tungsten (W) anode X-ray tube generally has a characteristic radiation containing K and L, which are associated with relatively high energies. Such X-ray tube also provides emission characteristic of a Ma line having an energy of 1.776 KeV. This energy line is typically suitable for detection and measuring light elements because of its relatively low energy. Further, this energy line is generally close to the energy levels of various light elements materials and can therefore optimally excite them.

For example, in measurements of aluminum, the use of the W-Ma energy line may provide a special advantage, being relatively close, and slightly above the K edge level of the aluminum at energy of 1.557KeV. The proximity between the exciting energy and the excited energy level allows efficient excitation of aluminum in the sample 60. Further, the energy of 1.776 KeV is slightly below the K edge energy level of Silicon, being at 1.839 KeV. Accordingly, the use of X-ray radiation at this energy generally does not excite silicon or provides very low excitation of silicon. This allows detection of other elements over the silicon background, which is typically abundant in semiconducting wafers/circuits.

It should be noted that, while the use of tungsten anode X-ray tube may provide various advantages for detection of LE in semiconductor samples, the technique of the present disclosure is not limited to this specific X-ray source and may be used with any X-ray source having one or more emission lines, or continuous radiation, within the range between 0.2 KeV and 2 KeV. Such X-ray sources include, for example: Microfocus X-ray Tubes, Transmission X-ray Tubes operating with a thin target (often beryllium or other light materials), Windowless (Vacuum) X-ray Tubes, Molybdenum Anode X-ray Tubes, Chromium, Copper, or Silver Anode X-ray Tubes, Electron Impact X-ray Sources, and/or Plasma-Based Soft X-ray Sources. While certain sources require filtering of the emitted X-ray radiation, the emission spectrum includes the desired energy range.

In some embodiments of the present disclosure, the inspection system 100 may include, or be positioned in, a sealed enclosure 160. The sealed enclosure 160 may be configures to withstand vacuum conditions of 2 mbar or below. The environment condition module 150 may be one or more vacuum pumps, which are operable to evacuate air from the sealed enclosure 160, enabling maintaining working conditions associated with pressure of 2 mbar or below. As indicated above, at such reduced pressure, the atmospheric absorption of low energy X-ray radiation is sufficiently low, enabling detection of LE associated fluorescent emission from the sample 60. Accordingly, the sample 60 may be inserted into the inspection system 100 and placed on the sample mount 140. Following insertion of the sample 60, the sealed enclosure 160 is closed and sealed tight, and the vacuum pump of environment condition module 150 is operated to evacuate air from the sealed enclosure 160. To provide monitoring of conditions within the enclosure, the system 100 may also include a pressure meter (not shown), and when the conditions reach the desired pressure of 2 mbar or below, the inspection may operate for inspection of the sample.

In some other embodiments, the environment condition module 150 may be a helium source, configured and operable to provide Helium flow toward the area of inspection, and/or the X-ray source 110. Accordingly, the helium source may include a helium tank, and corresponding piping/channel operable to provide a predetermined flow of helium toward the region of the inspection. The flow of helium is selected to be sufficient to substantially replace atmospheric air between the X-ray source 110 the sample 60, and the detector arrangement 130, with helium, thus eliminating, or at least significantly reducing absorption of low energy X-ray by the atmospheric air.

To maintain the desired helium rich conditions, the system 100 may include an enclosure 160, which in this embodiment need not be fully sealed. The enclosure 160 is generally have at least one opening, enabling atmospheric air to evacuate the enclosure, leaving room for helium gas to take its place. Further, to ensure helium rich environment around the inspection region, the helium source 150 and any piping or channel providing flow of helium into the system 100 may include an output nozzle positioned at a selected location in vicinity of the inspection region 50. For example, the output nozzle may be positioned at a selected distance from the inspection location 50. One or more additional output nozzles may be used positioned at different locations within the system.

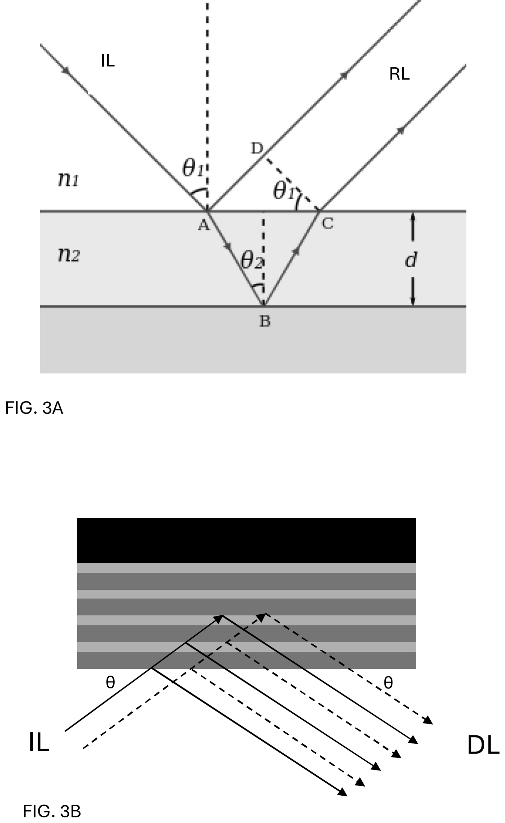

As indicated above, the inspection system includes an optical arrangement 120. The optical arrangement 120 provides focusing of the emitted X-ray radiation ER onto the inspection region 50. Further, as indicated, in some embodiments, the optical arrangement may provide selected filtering of the X-ray radiation, to filter out X-ray components having energy above a desired range, e.g. above 2 KeV. Further, in some embodiments, the optical arrangement 120 may be configured to filter the X-ray radiation to provide a radiation of a selected energy range within the range between 0.2 KeV and 2 KeV, to enable accurate detection of one or more specific elements within the sample 60. In this connection reference is made to Figs. 3A and 3B exemplifying the use of a reflective surface for filtering radiation based on energy (or wavelength). Fig. 3A illustrates a thin-film filter, and Fig. 3B exemplifies a multi-layer reflective filter structure.

As shown in Fig. 3A, input radiation IL is impinging onto a thin film at an angle θ₁. A portion of the radiation is reflected from the interface, and another portion propagates into the thin film and is reflected from the other opposite surface of the film at an angle θ₂. As a result, the reflected radiation includes a first portion reflected from the first interface, and a second portion reflected from the second interface, where the two radiation portions have a phase shift between them, associated with thickness of the film and its refractive index n₂. High reflection is achieved given the condition *n₂λ=2d*sin*(θ₁),* under the assumption that the environment refractive index n₁=1, i.e. the environment is air. For other environments, the calculation is slightly modified using n₁. Accordingly, for a selected reflection angle θ, the thin film provides high reflectivity for wavelengths under the condition that λ*=2d*sin*(θ₁)*/*n₂*, and reduced reflection for other wavelengths. In this case n₂ is the refractive index of the layer, d is the thickness of the layer, and λ is the wavelength of radiation.

An improved filter can be achieved using a multi-layer configuration, as exemplified in Fig. 3B. Fig. 3B exemplifies a multilayer monochromator configured to filter selected energies and reflect radiation of specific selected energies. The multilayer monochromator is formed of a plurality of thin layer having selected refractive indices and thickness selected such that a plurality of reflected radiation portions, reflected from different interfaces of the multi-layer structure, constructively interfere with respect to the selected wavelengths, and destructively interferes with respect to other wavelengths. This configuration results in improved filtering with respect to a thin film monochromator under similar wavelength conditions. To provide filtering of radiation and provide the desired energies of radiation impinging onto the inspection location 50, the present disclosure may utilize one or more reflecting surfaces configured using thin film or multi-layer filter arrangement at selected angles and having selected material and thickness properties to filter out undesired energies and reflect radiation components of the selected energies toward the sample.

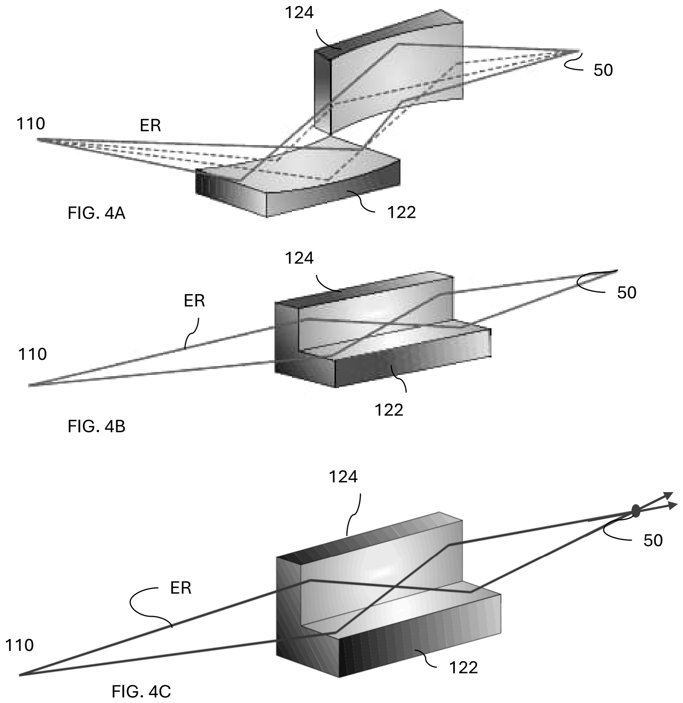

The use of reflective surfaces, including thin film and/or multilayer filtering arrangements, may further enable focusing of the emitted X-ray radiation onto the inspection location 50 on the sample. Figs. 4A to 4C exemplify three reflective optical arrangements configured for focusing of radiation ER emitted from a radiation source 110 and reflected (and optionally filtered) using reflecting surfaces 122 and 124. The reflecting surfaces are configured with a selected curvature and are positioned to reflect radiation portions and provide focusing of the radiation ER onto the inspection location 50.

The reflective surfaces 122 and 124 may be configured with an elliptic curvature, following a portion of an ellipse defined by *x²*/*a²+y²*/*b² =1,* where *a,* and *b* define the semi-major and semi-minor axes of the ellipse. Typically, the reflective surfaces 122 and 124 correspond to only a small portion of the ellipse, maintaining open regions for input and output radiation.

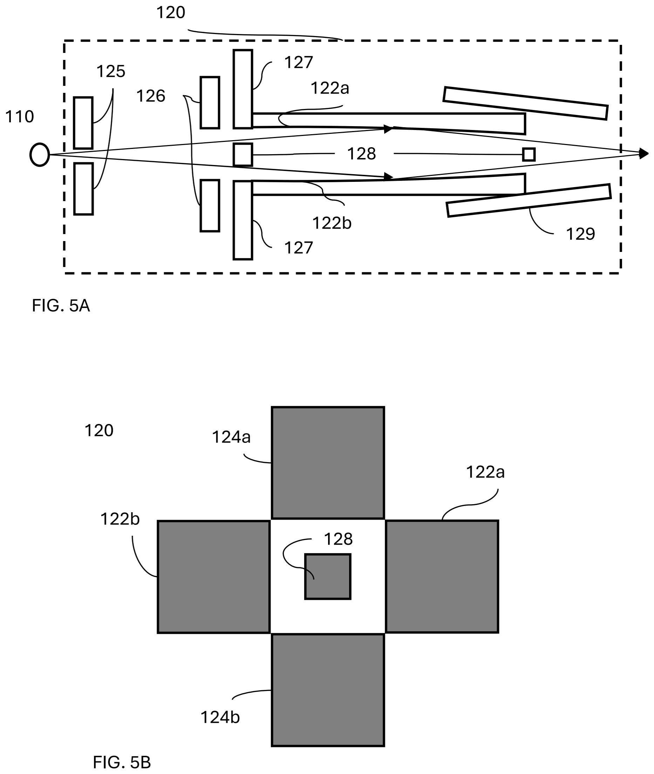

Following the examples of figs. 4A to 4C, reference is made to Figs. 5A and 5b exemplifying a further configuration of the optical arrangement 122 according to some embodiments of the present disclosure. Fig. 5A exemplifies a cross-section illustration of the optical arrangement and path of radiation passing therethrough, Fig. 5B exemplifies an illustration of the optical arrangement along the optical axis thereof. The optical arrangement 120 may be configured with an arrangement of reflecting surfaces 122a, 122b, 124a and 124b arranged is a square arrangement, providing a path for radiation to pass through an opening between the surfaces. Generally, various configurations may be used for the optical arrangement 120, where the use of X-ray radiation typically dictates the use of reflective and/or diffractive optics. According to the present disclosure, one or more of the reflective surfaces are coated with a multilayer monochromator coating as exemplified in Fig. 3B, providing efficient reflection of radiation of a selected energy range, and filtering out radiation of undesired energy bands, e.g. energy bands above 2 KeV. The optical arrangement 120 may further include one or more apertures, such as spot size aperture 125, input aperture 126, and mechanical collimator 127, and may also include central radiation blocking elements 128 configured to block radiation from propagating in paths that do not include reflection from surfaces 122 and 124. In some embodiments, the optical arrangement may also include anti-ghost surfaces 129 positioned at output of the optical arrangement 120 and configured to prevent formation of ghost image due to scattering of radiation components. Apertures 125, 126 and 127 may be adjustable, enabling control of the size of illumination spot, intensity of radiation impinging on the sample and/or collimation level of the radiation. The optical arrangement 120 thus provides focusing of the radiation emitted from the X-ray source 110, as well as filtering of the radiation to provide illumination with a selected energy range. Further, the optical arrangement 120 may be configured with one or more adjustable apertures enabling control of illumination spot size, allowing a selection between fast inspection or inspection with increased resolution.

As indicated above, the present disclosure relates to X-ray fluorescence inspection of samples, directed for detection and measurement of light elements within the sample. To enable detection and measurement of LE in the sample, the present technique utilizes vacuum and/or helium rich environment during the inspection, to reduce absorption of the relatively low-energy X-ray radiation by air surrounding the inspection region. An additional configuration enabling to reduce X-ray absorption by air is associated with reducing the path of X-ray radiation through the air. This approach may be done independently or in addition to the use of vacuum and/or helium rich environment of inspection. To this end, the present disclosure further provides an inspection system 100 utilizing a segmented detector arrangement configured for detection of X-ray radiation emitted from the inspection location on the sample. The detector arrangement may include a segmented detector formed of two or more detectors and configured to be positioned at a selected, reduced, distance from the inspection location.

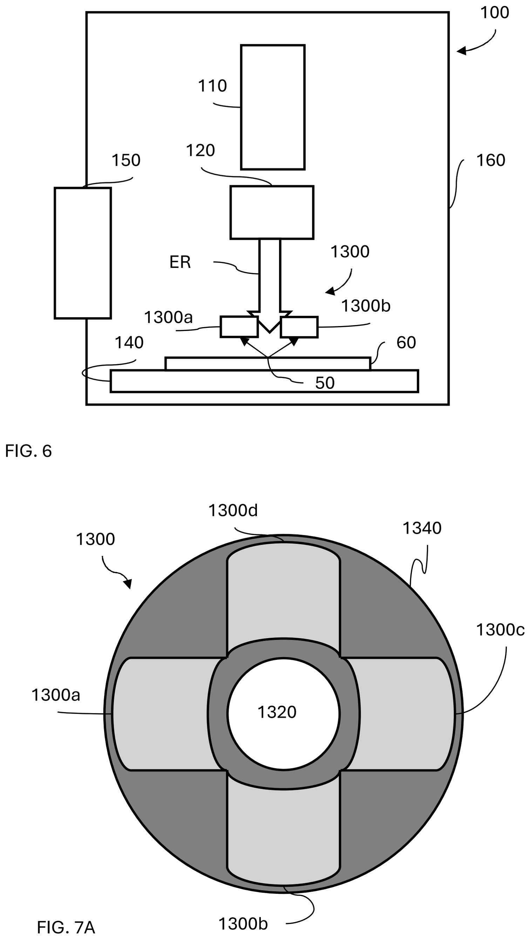

In this connection, reference is made to Fig. 6 illustrating an X-Ray fluorescence inspection system 100 according to some embodiments of the present disclosure. The system 100 is generally configured in accordance with the system 100 exemplified in Fig. 2 above, while including a segmented detector 1300. Segmented detector 1300 is formed of a number of two or more detectors, 1300a and 1300b as exemplified in Fig. 6. The two or more detectors are arranged around a path of X-ray radiation ER directed to impinge on the inspection location 50 and configured to detect fluorescent radiation emitted from the inspection location.

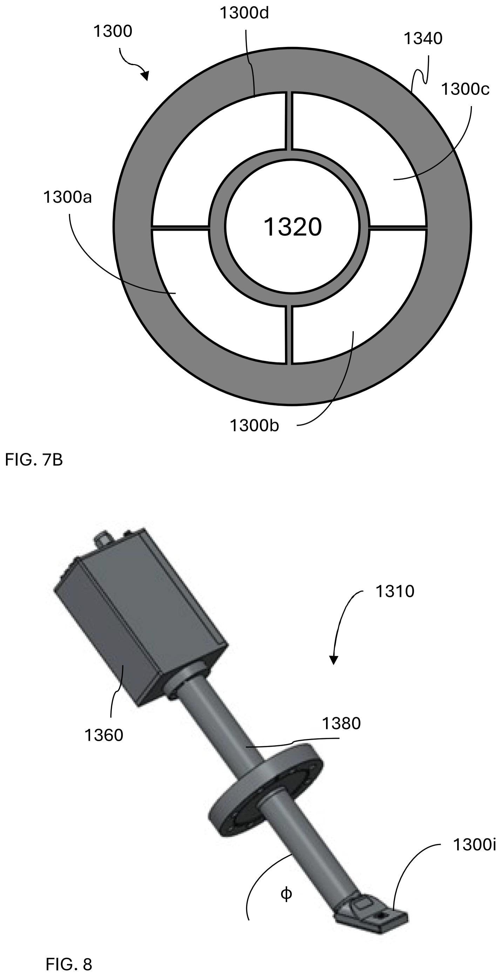

Generally, the detectors 1300a and 1300b (and additional detectors when used) may be silicon drift detectors (SDD) or SDD-type detectors, or other detectors compatible with standard SDD detectors. Figs. 7A and 7B exemplify two configurations of the detector arrangement 1300 according to some embodiments of the present disclosure. Fig. 7A illustrates a radial arrangement of sensor units 1300a-1300d around a central aperture 1320, and Fig. 7B illustrates an arrangement utilizing sensor unit 1300a-1300d configured to provide a circular sensor arrangement around the central aperture 1320. As shown in Figs. 7A and 7B, the detector arrangement may be configured in a ring-shaped structure 1340 divided into four independent segments 1300a-1300d. It should be noted that the number of segments may be any selected number being 2 detector segments, 3 detector segments, 4 detector segments, 5 detector segments, or any other suitable number of detector segments.

Each of the detector segments may include one or more detection elements and may be independently operable for detection of X-ray radiation, without a need to rely on the other segments. Further, the detector arrangement 1300 may generally include a central aperture 1320, or a hole, allowing passage of X-ray radiation emitted from the X-ray source 110 and propagating toward the inspection location 50 on the sample 60.

The detector arrangement 1300 described herein, having may have a planar ring-shape, or other configurations including a number of detector segments arranged around path of X-ray radiation directed at the inspection location 50, is configured to allows for close proximity to the sample. More specifically, the detector arrangement may be configured to be placed at a selected distance of 0.01 to 2 centimeters from the sample, or a distance of 2 centimeters or below, or a distance of 1 centimeter or below. Accordingly, the detector arrangement 1300 is configured to provide several advantages over the conventional configuration of detectors arranged around the X-ray source. Such advantages may include reduced absorption of X-ray radiation by air, increased solid angle for collection of fluorescent radiation. These advantages may add up together to enhance detection of fluorescent radiation and increase signal to noise ratio.

To further minimize the distance between the detector and the inspection location, the system and technique of the present disclosure may utilize an angled detector unit. Fig. 8 exemplified an angled detector unit 1310 including a detection region 1300i, a collection circuit 1360, and mechanism 1380 connecting the circuit 1360 to the detection region 1300i. the angled detector unit 1310 is configured with a selected angle Φ between the mechanism 1380 and the surface of the detection region 1300i. The selected angle Φ may be selected in a range between 10° and 80°. in some embodiments, the selected angle Φ may be selected to be 45°±15°. Providing a non-zero between the surface of the detector and connectors to the corresponding circuit 1360 enables improve packaging, allowing placing of the detection region 1300i at close proximity to the inspection location. More specifically, the detection region 1300i may be placed at a distance of 2 centimeter or below, or 1 centimeter or below, from the inspection location. Further, the selected angle Φ may reduce spatial interference of elements in the system.

Accordingly, the present disclosure provides a system and a corresponding methos for X-ray fluorescence inspection of semiconductor samples, directed for measuring light elements within the sample. The system present disclosure may be operable within vacuum and/or under helium rich environment, reducing absorption of low-energy X-ray by surrounding air. In some embodiments, the system may utilize a segmented detector formed of two or more detection units arranged around a path of transmission of the radiation directed toward the inspection location and positioned at a close proximity to the inspection location.

It is to be noted that the various features described in the various embodiments can be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based can readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. An X-ray fluorescence inspection system comprising:
at least one X-ray radiation source configured to emit X-ray radiation within a selected energy range;
an optical arrangement including one or more reflecting surfaces, configured to filter a specific energy band from the emitted X-ray radiation and focus radiation of the specific energy band onto an inspection location;
a sample mount configured to hold a sample for inspection;
wherein the specific energy band comprises energies between 0.2 keV and 2 keV, and the system is configured to maintain at least one of a vacuum environment or a helium-rich environment within at least a portion of the system associated with a path of the X-ray radiation.

2. The system of claim 1, further comprising:
a sealed enclosure; and
at least one vacuum pump configured to maintain the sealed enclosure at a working pressure of 20 mbar or below.

3. The system of claim 1, further comprising a helium source comprising an output nozzle and configured to provide a controlled flow of helium gas within the system at a selected location in the system.

4. The system of any one of claims 1 to 3, wherein the optical arrangement comprises at least one multilayer monochromator configured for filtering of specific energy band.

5. The system of any one of claims 1 to 4, wherein the optical arrangement further comprises an adjustable aperture enabling control of size of an illumination spot at the inspection location.

6. The system of any one of claims 1 to 5, further comprising a detector arrangement comprising a selected number of detectors configured for detection of fluorescent radiation emitted from the inspection location.

7. The system of claim 6, wherein the detector arrangement comprises a segmented detector, formed of two or more detection units arranged around a path of transmission of the radiation being focused onto the inspection location, the segmented detector is positioned at a distance of 1 centimeter or below from the inspection location.

8. The system of claim 7, wherein the segmented detector comprises one or more detectors having a selected angle between a detection surface and a connection to a respective detection circuit, wherein the selected angle is between 10° and 80°.

9. The system of any one of claims 1 to 8, wherein the sample mount comprises a sample translation stage configured to move the sample relative to the focused X-ray beam.

10. The system of any one of claims 1 to 9, configured for inspection and detection of presence and density of light elements in a sample, wherein light elements comprise elements having atomic number of 14 or below.

11. A method for X-ray fluorescence inspection, the method comprising:
generating X-ray radiation within a selected energy range using at least one X-ray radiation source;
filtering a specific energy band from the emitted X-ray radiation using an optical arrangement comprising one or more reflecting surfaces;
positioning a sample on a sample mount at an inspection location;
focusing the filtered radiation onto the inspection location;
providing at least one of a vacuum environment or a helium-rich environment within at least a portion of a path of the X-ray radiation and performing the X-ray fluorescence inspection, wherein the selected energy band comprises energies between 0.2 keV and 2 keV.

12. The method of claim 11, further comprising maintaining the inspection environment at a pressure of 20 mbar or below using a sealed enclosure and at least one vacuum pump.

13. The method of claim 11, further comprising providing a controlled flow of helium gas flow through an output nozzle releasing helium flow in one or more selected locations within the system in path of the X-ray radiation, using a helium source.

14. The method of any one of claims 11 to 13, further comprising using a detector assembly comprising using an assembly of two or more detectors positioned around the at least one X-ray radiation source and detecting fluorescence emissions from the sample using a detector assembly.

15. The method of claim 14, wherein detecting fluorescence emissions from the sample using a detector assembly comprising using a segmented detector formed of two or more detection units arranged around a path of transmission of the radiation being focused onto the inspection location, the segmented detector is positioned at a distance of 1 centimeter or below from the inspection locations.
